# EUROPEAN PATENT APPLICATION

(11) **EP 4 722 974 A1**
(43) Date of publication of application: **08.04.2026**
(21) Application number: 25196666.9
(22) Date of filing: 19.08.2025
(51) Int. Cl.: G06K 7/10

(54) **OPTICAL ASSEMBLY, OPTICAL LENS, AND IMAGING READER**

(30) Priority: 20.09.2024 CN 202411314613
(71) Applicant: Hand Held Products, Inc., Charlotte, NC 28202 (US)
(72) Inventor: ZHANG, QianAn, Charlotte, 28202 (US); FANG, Chunhuan, Charlotte, 28202 (US); LI, Min, Charlotte, 28202 (US)
(74) Representative: Haseltine Lake Kempner LLP

(57) **Abstract**

In accordance with various embodiments of the present disclosure, an optical assembly is provided. In some embodiments, the optical assembly (130) comprises an imaging component (140), an aiming system comprising an aiming light source (148) and an aiming lens (152) through which the aiming light is transmitted, and an illumination system comprising an illumination light source (158) and an illumination lens (160) having a lens body. The lens body has an incident surface (172) positioned to receive light from the illumination light source, a first exit surface positioned such that some of the light received from the illumination light source exits through the first exit surface without being reflected within the lens body, a reflective surface (170) adapted to reflect some of the light received from the illumination light source within the lens body, and a second exit surface positioned such that some of the light reflected by the reflective surface exits through the second exit surface.

## Description

### FIELD OF THE INVENTION

Embodiments of the present disclosure generally relate to illumination assemblies for imaging apparatuses, such as, but not limited to, barcode and/or other symbology scanners.

### BACKGROUND

A barcode reader (also referred to as a barcode scanner) is an electronic device that can capture information stored in barcodes and other indicia, such as QR codes.

Such readers often have a scan engine that includes an imaging component (e.g., a camera) to capture an image of the indicia, an illumination light to illuminate the indicia for image capture, and an aiming light to enable a user to aim the reader at the indicia. A transparent window is typically mounted in front of the scan engine to protect the scan engine. The inner and/or outer surface of the window may reflect the illumination light to the imaging component and cause window reflection noise issues.

Applicant has identified many technical challenges and difficulties associated with barcode readers/scanners, in particular scan engines related to barcode readers/scanners.

### BRIEF SUMMARY

Various embodiments described herein relate to optical lenses, optical assemblies, and imaging readers.

In accordance with various embodiments of the present disclosure, an optical assembly is provided. In some embodiments, the optical assembly comprises an imaging component having a field of view, an aiming system comprising an aiming light source and an aiming lens through which aiming light from the aiming light source is transmitted, and an illumination system comprising an illumination light source and an illumination lens having a lens body. The lens body has an incident surface positioned to receive light into the lens body from the illumination light source, a first exit surface positioned such that some of the light received from the illumination light source through the incident surface exits through the first exit surface without being reflected within the lens body, a reflective surface adapted to reflect some of the light received from the illumination light source through the incident surface within the lens body, and a second exit surface positioned such that at least some of the light reflected by the reflective surface exits through the second exit surface.

In some embodiments, the illumination system is positioned on an opposite side of the aiming system from the imaging component.

In some embodiments, the light exiting the lens body through the first exit surface is adapted to illuminate a first portion of an object positioned in a near field portion of the field of view and the light exiting the lens body through the second exit surface is adapted to illuminate a second portion of the object positioned in the near field portion of the field of view.

In some embodiments, the light that exits through the first exit surface is directed in generally a first direction and the light that exits through the second exit surface is directed in generally a second direction at an angle to the first direction.

In some embodiments, the reflective surface has a reflective coating.

In some embodiments, the first exit surface is aspheric, and the second exit surface is cylindrical or aspheric.

In some embodiments the incident surface is planar or aspheric.

In accordance with various embodiments of the present disclosure, an optical lens is provided. In some embodiments, the optical lens comprises a lens body. The lens body has an incident surface adapted to receive light into the lens body from a light source, a first exit surface positioned such that some of the light received from the light source through the incident surface exits through the first exit surface without being reflected within the lens body, a reflective surface adapted to reflect some of the light received from the light source through the incident surface within the lens body, and a second exit surface positioned such that at least some of the light reflected by the reflective surface exits through the second exit surface.

In accordance with various embodiments of the present disclosure, an imaging reader is provided. In some embodiments, the imaging reader comprises a housing and an optical assembly mounted in the housing. The optical assembly comprises an imaging component having a field of view, an aiming system comprising an aiming light source and an aiming lens through which aiming light from the aiming light source is transmitted, and an illumination system comprising an illumination light source and an illumination lens having a lens body. The lens body has an incident surface positioned to receive light into the lens body from the illumination light source, a first exit surface positioned such that some of the light received from the illumination light source through the incident surface exits through the first exit surface without being reflected within the lens body, a reflective surface adapted to reflect some of the light received from the illumination light source through the incident surface within the lens body, and a second exit surface positioned such that at least some of the light reflected by the reflective surface exits through the second exit surface.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is an example system architecture diagram illustrating an example indicia data capturing and processing platform, in accordance with some embodiments of the present disclosure;
FIG. 2 illustrates an example block diagram of an example indicia data capturing device in accordance with example embodiments described herein;
FIG. 3 is a perspective view of an example scan engine of an example indicia data capturing device, in accordance with some embodiments of the present disclosure;
FIG. 4 is an exploded view of the example scan engine of FIG. 3;
FIG. 5A is a perspective view from the front, right, and bottom of the example illumination lens of the example scan engine of FIG. 3;
FIG. 5B is a perspective view from the front, left, and top of the example illumination lens of the example scan engine of FIG. 3;
FIG. 5C is a bottom view top of the example illumination lens of the example scan engine of FIG. 3;
FIG. 5D is a top view of the example illumination lens of the example scan engine of FIG. 3;
FIG. 5E is a right side view of the example illumination lens of the example scan engine of FIG. 3;
FIG. 5F is a left side view of the example illumination lens of the example scan engine of FIG. 3;
FIG. 5G is a front view of the example illumination lens of the example scan engine of FIG. 3;
FIG. 5H is a rear view of the example illumination lens of the example scan engine of FIG. 3;
FIG. 5I is a sectional view of the example illumination lens of the example scan engine of FIG. 3, along line A-A of FIG. 5G;
FIG. 6 illustrates example light paths through the example illumination lens of the example scan engine of FIG. 3; and
FIG. 7 illustrates example light paths through the example scan engine of FIG. 3.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

Unless specifically set forth herein, the terms "a," "an" and "the" are not limited to one element, but instead should be read as meaning "at least one." The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

In the present disclosure, the term "indicia" refers to one or more machinereadable/machine-decodable codes and/or symbols that represent data and information in a visual form that may include, but not limited to, patterns, lines, numbers, letters, and/or the like. Examples of indicia may include, but are not limited to, one-dimensional (1D) barcodes, two-dimensional (2D) barcodes, Quick Response (QR) code, information-based indicia, Aztec codes, data matrix, texts, and/or the like. In some embodiments, indicia may be affixed, printed, or otherwise attached to items and/or objects to provide information regarding the item or the object in a machine-readable/machine-decodable format.

In some embodiments, to capture data and/or information from indicia, an indicia data capturing device may be used. In the present disclosure, the term "indicia data capturing device" refers to a device that electro-optically reads and/or scans indicia. Examples of indicia data capturing devices may include, but are not limited to, barcode scanners, QR code scanners, imaging scanners, area-image scanners, imaging readers, and/or the like. In some embodiments, an example indicia data capturing device may be hand-held (for example, a scanner that can be moved by a user's hand over the indicia being scanned). In some embodiments, an example indicia data capturing device may be fixedly mounted (for example, a scanner that is mounted on top of a counter or a table).

As an example, a user may trigger an indicia data capturing device (e.g., by pulling a trigger of an indicia data capturing device, by pointing an indicia data capturing device in streaming mode at the indicia, etc.) to capture indicia imaging data of the indicia. In some embodiments, the indicia imaging data may comprise digital images of the indicia. In some embodiments, the indicia data capturing device may illuminate its field of view with a visible light source (such as, but not limited to, white light or laser light) through its illumination component during image capture, especially in low lighting conditions. In some embodiments, illuminating the indicia during imaging helps ensure that the captured indicia imaging data is suitable for processing.

In some embodiments, after the indicia data capturing device captures the indicia imaging data, the indicia data capturing device may process the indicia imaging data through a processor that is part of an indicia data capturing device. In some embodiments, the processor recognizes the indicia from the indicia imaging data and decodes the indicia according to a type of the indicia (such as, but not limited to, 1D barcodes, 2D barcodes, QR codes and/or the like) and/or a symbology format of the indicia (such as, but not limited to, Code 11, Code 128, and/or the like).

Indicia data capturing devices, such as barcode readers, which employ digital imaging typically also make use of an illumination system to provide light above and beyond the ambient light of the user environment. This allows exposure times to be shorter which reduces image blur caused by unintended motion, but there are other advantages that can be achieved if the illumination system is well designed. High uniformity of the illumination improves the quality of the image, improving the decoding performance, especially on direct part marked (DPM) codes. Many such codes are very small (high resolution) requiring them to be very close to the scanner, but illumination systems often have worse uniformity the closer you get to the reader.

There are many technical challenges and difficulties associated with such illumination systems. For example, as described above, a transparent window is typically mounted in front of the scan engine and the inner and/or outer surface of the window may reflect the illumination light to the camera and cause window reflection noise issues. One approach that has been used to address the window reflection noise is to change the scan engine design layout and place the imaging component farther away from illumination light source (e.g., LED) such that any light reflected by the window will not be captured by imaging component. One problem with this solution is that the illumination light may not cover the full near field field-of-view (FOV) of the imaging component such that, when a barcode is placed within the near field, the side of the barcode that is farther away from the illumination lens is not illuminated. As such, a barcode in the near field may not be properly decoded. In various embodiments, the near field of the FOV is considered to be about 10-15 millimeters in front of the imaging component.

The term "barcode reader" is used herein to refer to any type of indicia data capturing devices that may benefit from embodiments of the present disclosure, and the term "barcode" is used herein to refer to any type of indicia that may be read by such indicia data capturing devices. The term "camera" is used herein to refer to any type of imaging component.

Various embodiments of the present disclosure overcome these technical difficulties and challenges and provide various technical improvements to such barcode scan engines and illumination systems.

Embodiments of the present disclosure provide an optical assembly, a lens for an optical assembly, and an imaging reader having such an optical assembly and lens. In accordance with various embodiments of the present disclosure, an optical assembly (also referred to as a scan engine) positions its camera farther away from its illumination light source such that any light reflected by the window will not be captured by camera, and uses an asymmetrical optical lens that can provide illumination light to cover the whole wide angle FOV of the camera in the near and far fields.

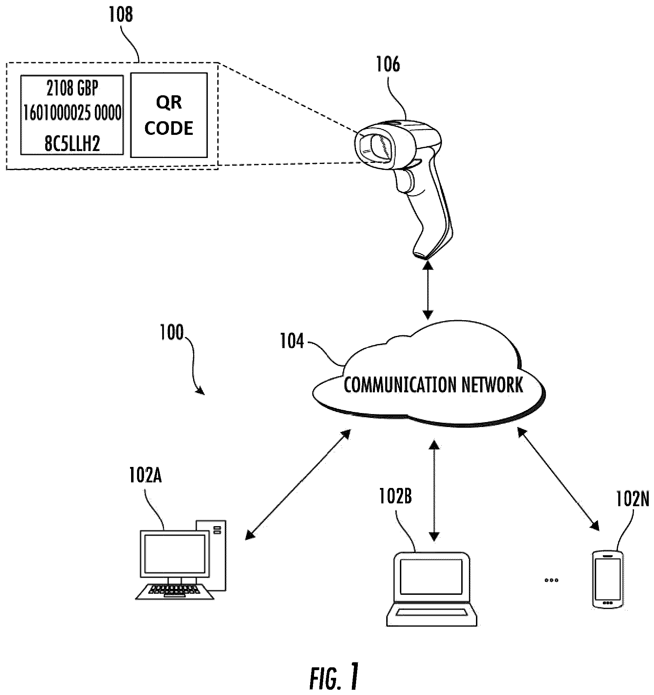

FIG. 1 illustrates an example indicia data capturing and processing platform 100 within which embodiments of the present disclosure may operate. In the example shown in FIG. 1, the indicia data capturing and processing platform 100 may comprise an indicia data capturing device 106 in electronic communication with one or more indicia data processing devices 102A, 102B, . . . 102N via a communication network 104. In some embodiments, for example, the indicia data processing devices 102A, 102B, . . . 102N may perform inventory tracking, order processing, etc.

For example, the indicia data capturing and processing platform 100 may capture and process indicia data associated with the indicia 108. While the indicia 108 in the example shown in FIG. 1 comprises texts, numbers, and a QR code, it is noted that the scope of the present discourse is not limited to the example shown in FIG. 1. As described above, an example indicia in accordance with embodiments of the present disclosure may include, but are not limited to, 1D barcodes, 2D barcodes, information-based indicia, Aztec codes, data matrix, and/or the like.

In some embodiments, a user may utilize the indicia data capturing device 106 of the indicia data capturing and processing platform 100 to capture indicia imaging data associated with the indicia 108. For example, a user may trigger the indicia data capturing device 106 by pointing the indicia data capturing device 106 at the indicia 108 and pulling the trigger of the indicia data capturing device 106. In some embodiments, the indicia data capturing device 106 may comprise an imaging component that comprises an imaging sensor. The imaging sensor may capture an image of the indicia 108 and may generate indicia imaging data corresponding to the indicia 108. In some embodiments, the imaging component may be part of a scan engine. As described further below, such a scan engine may comprise the imaging component, an illumination component or system that illuminates the field of view of the imaging sensor so as to improve the imaging quality of the indicia imaging data, and an aiming component or system that projects an aiming light to enable a user to aim the device at the indicia 108.

In some embodiments, the indicia data capturing device 106 may communicate data and/or information (such as, but not limited to, indicia imaging data) to the one or more indicia data processing devices 102A, 102B, . . ., 102N. In some embodiments, the communication network 104 may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the communication network 104 may include an 802.11, 802.16, 802.20, and/or WiMax network. Further, the communication network 104 may include a public network (such as the Internet), a private network (such as an intranet), or combinations thereof, and may utilize a variety of networking protocols including, but not limited to, TCP/IP based networking protocols. For instance, the networking protocol may be customized to suit the needs of the indicia data capturing device 106. In some embodiments, the protocol is a custom protocol of JSON objects sent via a WebSocket channel. In some embodiments, the protocol is JSON over RPC, JSON over REST/HTTP, and the like.

While the description above provides some examples of the communication network that can facilitate data communications between the indicia data capturing device 106 and the indicia data processing devices 102A, 102B, . . ., 102N, it is noted that the scope of the present disclosure is not limited to the description above. In some embodiments, the indicia data capturing device 106 may communicate with the indicia data processing devices 102A, 102B, . . ., 102N through other means. For example, the indicia data capturing device 106 may communicate with the indicia data processing devices 102A, 102B, . . ., 102N through communication protocols such as, but not limited to, general packet radio service (GPRS), Universal Mobile Telecommunications System (UMTS), Code Division Multiple Access 1900 (CDMA1900), CDMA1900 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), Institute of Electrical and Electronics Engineers (IEEE) 802.11 (Wi-Fi), Wi-Fi Direct, 802.16 (WiMAX), ultrawideband (UWB), infrared (IR) protocols, near field communication (NFC) protocols, Wibree, Bluetooth protocols, wireless universal serial bus (USB) protocols, and/or any other wireless protocol. The indicia data capturing device 106 may use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

In some embodiments, the one or more indicia data processing devices 102A, 102B, . . ., 102N may receive indicia imaging data from the indicia data capturing device 106 and may process the indicia imaging data to generate one or more decoded data strings that correspond to the indicia 108. Additionally, or alternatively, the indicia data capturing device 106 may generate one or more decoded data strings based on the indicia imaging data and may transmit the one or more decoded data strings to the one or more indicia data processing devices 102A, 102B, . . ., 102N.

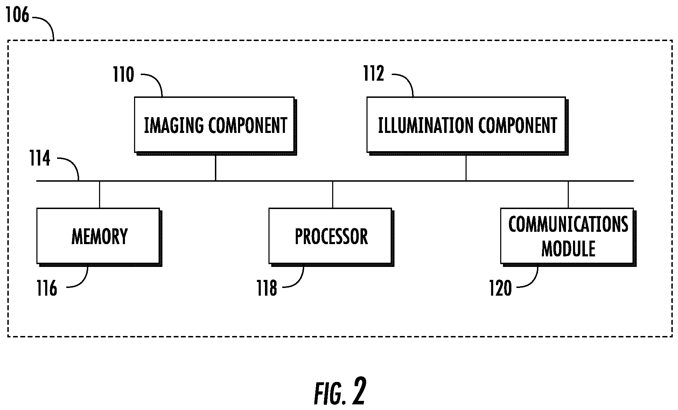

The indicia data capturing device 106 of FIG. 1 may include one or more components that are in electronic commutations with one another. For example, as shown in FIG. 2, the indicia data capturing device 106 may include a processor 118, a memory 116, a communications module 120, an imaging component 110, and an illumination component 112 that are in electronic communication with one another via a system bus 114. In some embodiments, the system bus 114 refers to a computer bus that connects these components so as to enable data transfer and communications between these components.

In some embodiments, the imaging component 110 may comprise one or more imaging sensors including, but are not limited to, a color or monochrome 1D or 2D Charge Coupled Device (CCD), Complementary Metal-Oxide-Semiconductor (CMOS), N-channel Metal-Oxide-Semiconductor (NMOS), P-channel Metal-Oxide-Semiconductor (PMOS), Charge Injection Device (CID) or Charge Modulation Device (CMD) solid state image sensor, camera, and/or the like. In some embodiments, the imaging component 110 may define a field of view for capturing an image of indicia and generating indicia imaging data.

In some embodiments, the indicia data capturing device 106 may comprise an illumination component 112 that is configured to illuminate the field of view of the imaging component 110, so as to improve the quality of the captured indicia imaging data. In some embodiments, the illumination component 112 may include an illumination source and an illuminating optics assembly. Examples of illuminating optics assemblies may include, but are not limited to, one or more lenses, diffusers, wedges, reflectors or a combination of such elements, for directing light from illumination source in the direction of the field of view. For example, if the image of the indicia 108 shown in FIG. 1 is to be captured, the illuminating optics assembly may be configured to direct the light from the illumination source on the indicia 108. Some examples of the illumination source may include, but are not limited to, laser diodes (for example, violet laser diodes, visible laser diodes, edge-emitting laser diodes, surface-emitting laser diodes, and/or the like). Additionally, or alternatively, the illumination source may comprise one or more light-emitting diodes (LEDs). Additionally, or alternatively, the illumination source may comprise one or more other forms of natural and/or artificial sources of light.

In some embodiments, the illuminating optics assembly of the illumination component comprises an asymmetric lens as described below.

In some embodiments, the imaging component 110 and/or the illumination component 112 may be controlled by the processor 118. For example, the processor 118 may transmit electronic instructions to the illumination component 112 via the system bus 114 to trigger the illumination component 112 to illuminate the field of view of the imaging component 110, may transmit electronic instructions to the imaging component 110 to trigger the imaging component 110 to capture indicia imaging data that include one or more images of the indicia, and may receive the indicia imaging data from the imaging component 110.

The processor 118 may be embodied in a number of different ways and may, for example, include one or more processing devices configured to perform independently. Additionally, or alternatively, the processor 118 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

For example, the processor 118 may be embodied as one or more complex programmable logic devices (CPLDs), microprocessors, multi-core processors, co-processing entities, application-specific instruction-set processors (ASIPs), and/or controllers. Further, the processor 118 may be embodied as one or more other processing devices or circuitry. The term circuitry may refer to an entirely hardware embodiment or a combination of hardware and computer program products. Thus, the processor 118 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processor 118 may be configured for a particular use or configured to execute instructions stored in volatile or non-volatile media or otherwise accessible to the processor 118. As such, whether configured by hardware or computer program products, or by a combination thereof, the processor 118 may be capable of performing steps or operations according to embodiments of the present disclosure when configured accordingly.

In an example embodiment, the processor 118 may be configured to execute instructions stored in the memory 116 or otherwise accessible to the processor. Alternatively, or additionally, the processor 118 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processor 118 is embodied as an executor of software instructions, the instructions may specifically configure the processor to perform the algorithms and/or operations described herein when the instructions are executed.

In some embodiments, the memory 116 may be non-transitory and may include, for example, one or more volatile and/or non-volatile memories. In other words, for example, the memory 116 may be an electronic storage device (e.g., a computer readable storage medium). The memory 116 may be configured to store information, data, content, applications, instructions, or the like, for enabling the indicia data capturing device 106 to carry out various functions in accordance with example embodiments of the present disclosure. In this regard, the memory 116 may be preconfigured to include computer-coded instructions (e.g., computer program code), and/or dynamically be configured to store such computer-coded instructions for execution by the processor 118.

In an example embodiment, the indicia data capturing device 106 further includes a communications module 120 that may enable the indicia data capturing device 106 to transmit the indicia imaging data to other devices (such as, but not limited to, the indicia data processing devices 102A, 102B, ... , 102N as shown in FIG. 1) through a communication network. The communications module 120 may be any means such as a device or circuitry embodied in either hardware or a combination of hardware and software that is configured to receive and/or transmit data from/to a network and/or any other device, circuitry, or module in communication with the indicia data capturing device 106. In this regard, the communications module 120 may include, for example, a network interface for enabling communications with a wired or wireless communication network. For example, the communications module 120 may include one or more circuitries, network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

Some examples of the indicia data capturing device 106 may include, but are not limited to, an indicia scanner, a handheld scanner, a flatbed scanner, a camera, and/or any other device that is capable of capturing a plurality of images of the indicia and/or generating indicia imaging data of the indicia. Additionally, or alternatively, the indicia data capturing device 106 may be in other form(s) and /or may comprise other component(s).

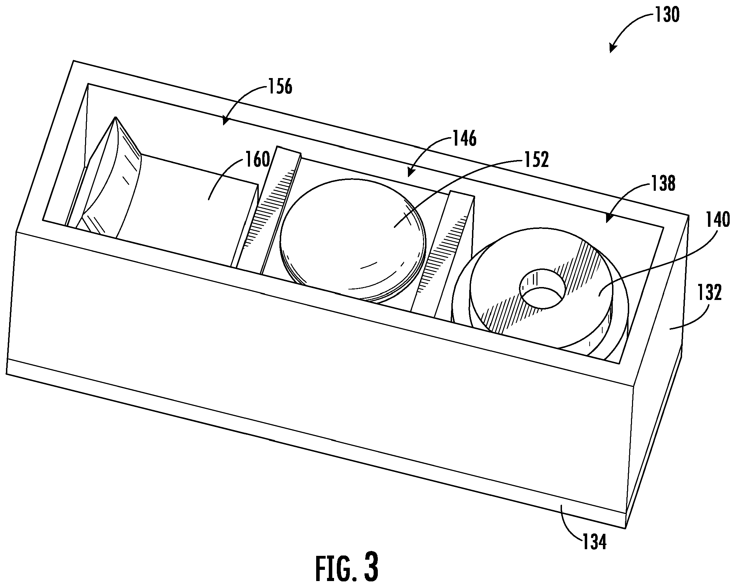

Referring now to FIGS. 3-4, perspective and exploded perspective views, respectively, of an example optical assembly (also termed a scan engine) are illustrated. As illustrated in FIG. 3-4, an example scan engine 130 comprises outer walls 132 and a floor 134 defining three separate chambers which house an imaging portion 138, an aiming portion 146, and an illumination portion 156. A protective window (not illustrated) typically encloses the chambers and protects the imaging portion 138, the aiming portion 146, and the illumination portion 156. In various embodiments, the aiming portion 146 is positioned between the imaging portion 138 and the illumination portion 156. In other words, the illumination portion 156 is positioned on an opposite side of the aiming portion 146 from the imaging portion 138. In this regard, the illumination portion 156 is positioned sufficiently far from the imaging portion 138 that light from the illumination portion 156 will not reflect off the protective window to the imaging component 140.

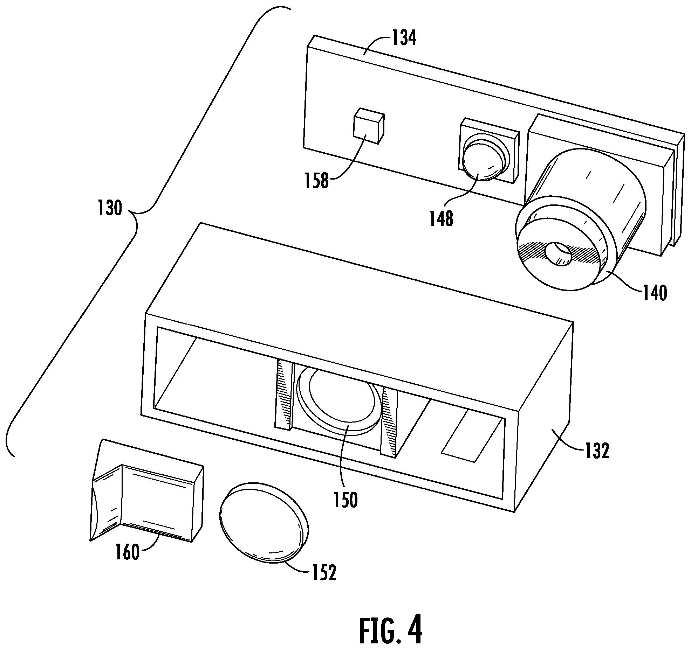

As best seen in FIG. 4, the imaging portion 138 comprises an imaging component 140 (e.g., a camera). In various embodiments, any suitable imaging component may be used. As described further below, the imaging component 140 has a field of view (FOV). As best seen in FIG. 4, the aiming portion 146 comprises an aiming light source 148 (e.g., an LED), an aiming lens 152 through which aiming light from the aiming light source 148 is transmitted, and an aiming lens housing 150 that supports the aiming lens 152. As best seen in FIG. 4, the illumination portion 156 comprises an illumination light source 158 (e.g., an LED) and an illumination lens 160 through which the illumination light is transmitted. In various embodiments, the illumination lens may be constructed of any suitable material (including, but not limited to, glass, polycarbonate, or polymethyl methacrylate (PMMA), using any suitable manufacturing method (including, but not limited to, injection molding).

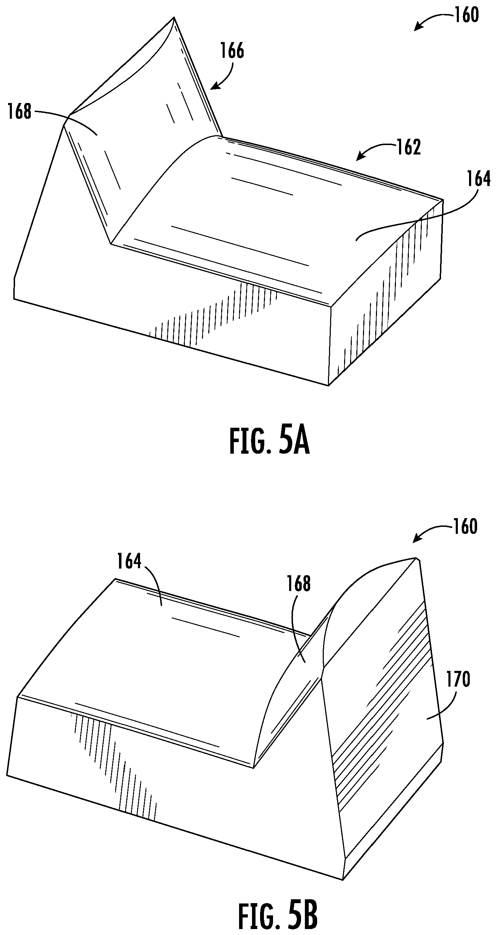

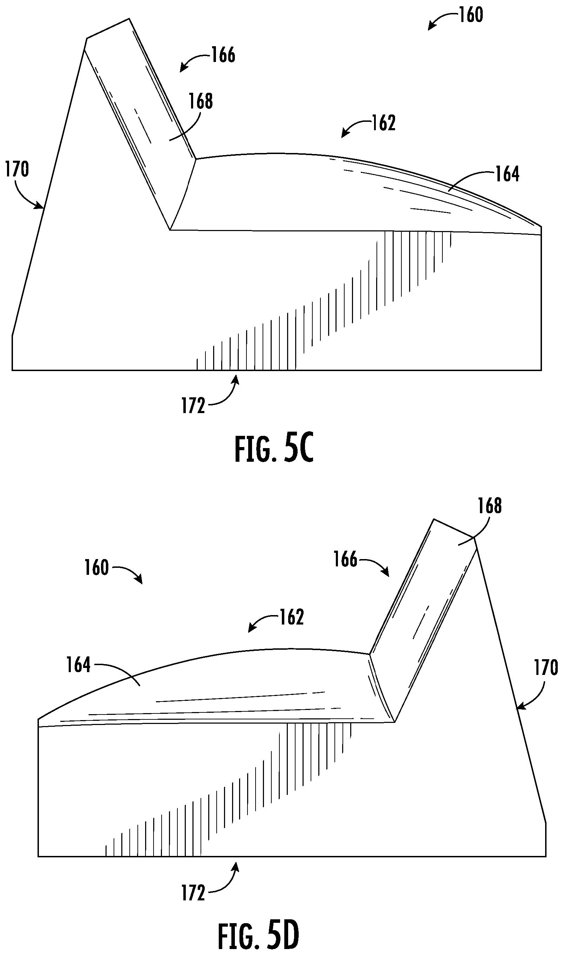

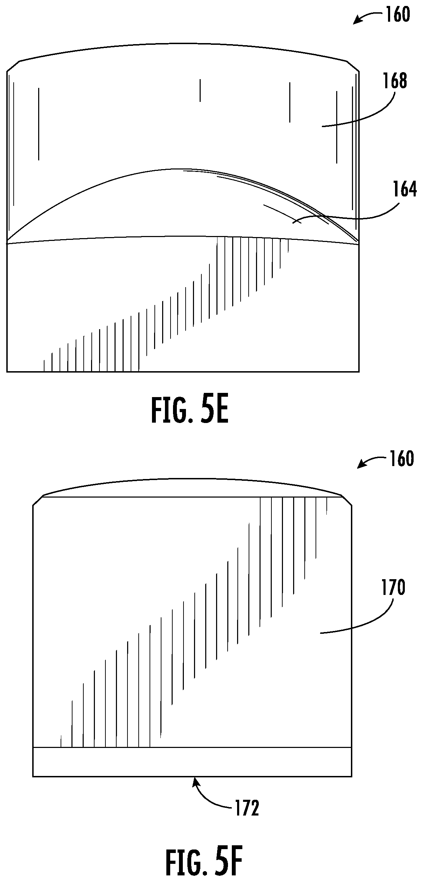

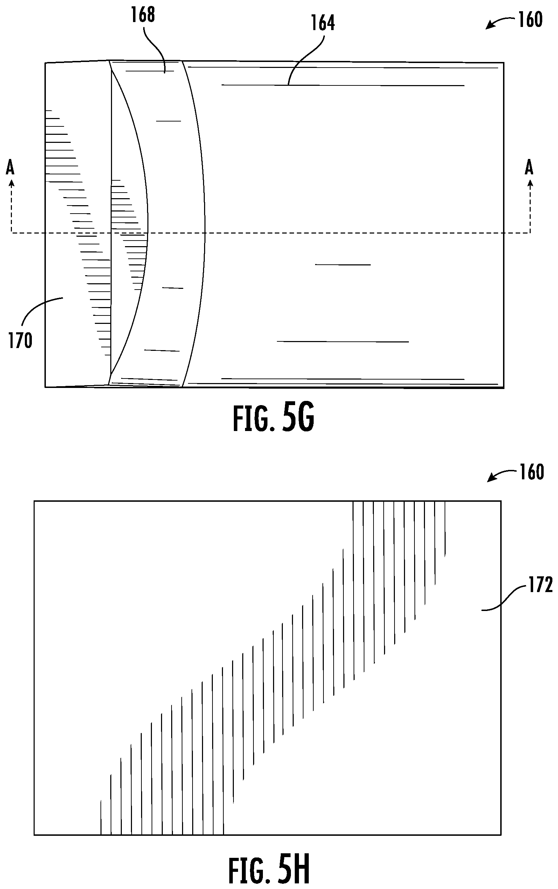

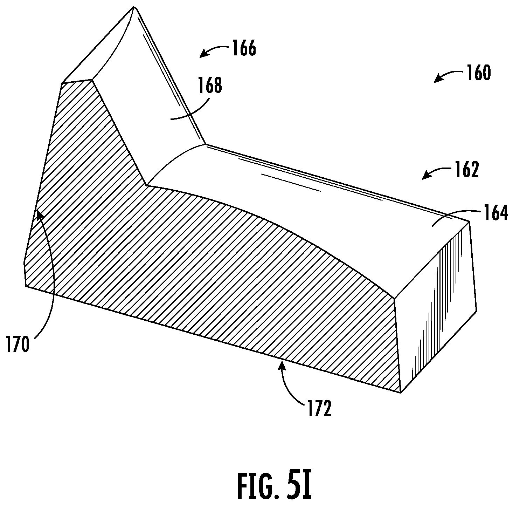

Referring now to FIGS. 5A-5I, various views of an example illumination lens are illustrated. In various embodiments, the illumination lens 160 comprises an asymmetric optical lens. In this regard, different portions of an asymmetric optical lens of embodiments of the present disclosure have different optical properties. As illustrated in FIGS. 5A-5I, the illumination lens 160 comprises a lens body having a right side 162 and a left side 166. As described further below, the right side 162 and the left side project light in different directions and thereby illuminate different areas of the FOV of the imaging component 140.

As illustrated, the illumination lens 160 comprises an incident surface 172 positioned to receive light into the lens body from the illumination light source 158. In various embodiments, the incident surface 172 is planar or aspheric.

As illustrated, the right side 162 of the illumination lens 160 comprises a right side surface 164, which may also be termed a first exit surface. In various embodiments, the right side surface 164 is positioned and shaped such that some of the light received from the illumination light source 158 through the incident surface 172 exits through the right side surface 164 without being reflected within the lens body. In various embodiments, the right side surface 164 is aspheric. In various embodiments, the right side 162 of the illumination lens 160 has positive optical power that narrows or focuses the light from the illumination light source 158.

As illustrated, the illumination lens 160 comprises a reflective wall or surface 170. In various embodiments, the reflective surface 170 reflects some of the light received from the illumination light source 158 through the incident surface 172 within the lens body as described further below. In various embodiments, the reflective surface 170 has a reflective coating (i.e., on the outside of the reflective surface 170) that makes the reflective surface 170 reflective. In various embodiments, any suitable reflective coating material may be used, such as, for example, gold.

As illustrated, the left side 166 of the illumination lens 160 comprises a left side surface 168, which may also be termed a second exit surface. In various embodiments, the left side surface 168 is positioned and shaped such that some of the light received from the illumination light source 158 through the incident surface 172 and reflected by the reflective surface 170 exits through the left side surface 168. In various embodiments, the left side surface 168 is cylindrical or aspheric.

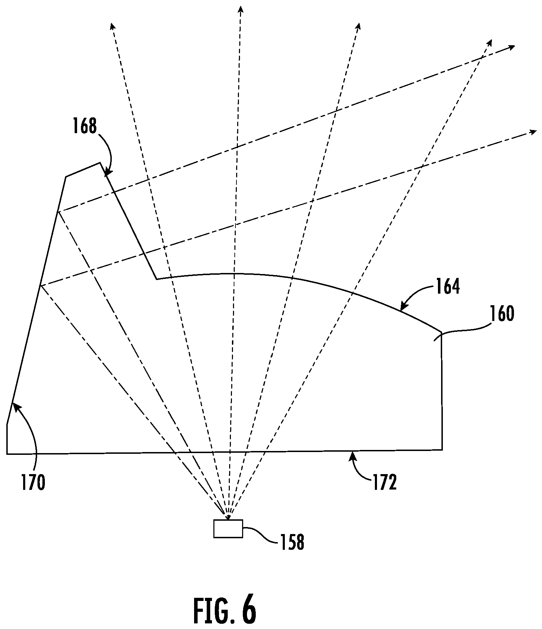

In various embodiments, the light that exits through the right side surface 164 is directed in generally a first direction (i.e., generally outward from the lens) and the light that exits through the left side surface 168 is directed in generally a second direction at an angle to the first direction (i.e., generally to the side and outward). This is illustrated in FIG. 6 in which the light that exits through the right side surface 164 is illustrated by the dashed line arrows and the light that exits through the left side surface 168 is illustrated by the dot-dash line arrows.

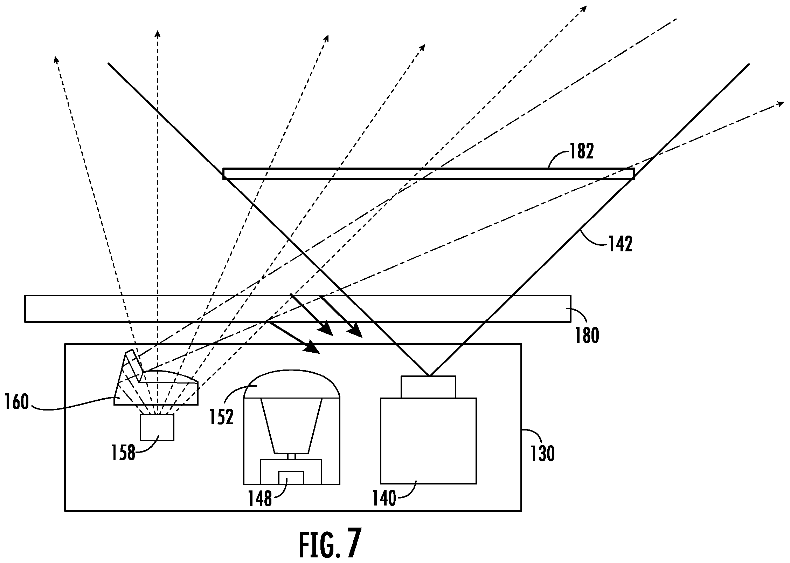

Referring now to FIG. 7, the use of an asymmetric lens of embodiments of the present disclosure to fully illuminate a barcode in the near field is illustrated. FIG. 7 illustrates a scan engine 130 as described above, with the protective window 180 and the FOV 142 of the imaging component 140 shown. FIG. 7 illustrates a barcode 182 positioned in the near field of the FOV 142. As illustrated in FIG. 7, positioning the illumination portion (i.e., the illumination light source 158 and the illumination lens 160) away from the imaging component 140 means that the illumination light that is reflected off the inner and/or outer surface surfaces of the protective window 180 (indicated by the solid line arrows) does not reach the imaging component 140 and cause window reflection noise issues.

As illustrated in FIG. 7, the illumination light exiting the illumination lens 160 through the right side surface 164 (illustrated by the dashed line arrows) illuminates the left side (as seen in FIG. 7) portion of the barcode 182 and the illumination light reflected off the reflective surface and exiting the illumination lens 160 through the left side surface 168 (illustrated by the dot-dash line arrows) illuminates the right side (as seen in FIG. 7) portion of the barcode 182. In this regard, the entire barcode 182 is illuminated in the near field of the FOV 142.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. An optical assembly comprising:
an imaging component having a field of view;
an aiming system comprising an aiming light source and an aiming lens through which aiming light from the aiming light source is transmitted; and
an illumination system comprising an illumination light source and an illumination lens having a lens body, the lens body having an incident surface positioned to receive light into the lens body from the illumination light source, a first exit surface positioned such that some of the light received from the illumination light source through the incident surface exits through the first exit surface without being reflected within the lens body, a reflective surface adapted to reflect some of the light received from the illumination light source through the incident surface within the lens body, and a second exit surface positioned such that at least some of the light reflected by the reflective surface exits through the second exit surface.

2. The optical assembly of claim 1, wherein the illumination system is positioned on an opposite side of the aiming system from the imaging component.

3. The optical assembly of claim 1, wherein the light exiting the lens body through the first exit surface is adapted to illuminate a first portion of an object positioned in a near field portion of the field of view; and
wherein the light exiting the lens body through the second exit surface is adapted to illuminate a second portion of the object positioned in the near field portion of the field of view.

4. The optical assembly of claim 1, wherein the light that exits through the first exit surface is directed in generally a first direction; and
wherein the light that exits through the second exit surface is directed in generally a second direction at an angle to the first direction.

5. The optical assembly of claim 1, wherein the reflective surface has a reflective coating.

6. The optical assembly of claim 1, wherein the first exit surface is aspheric; and wherein the second exit surface is cylindrical or aspheric.

7. The optical assembly of claim 1, wherein the incident surface is planar or aspheric.

8. A lens comprising:
a lens body, the lens body having an incident surface adapted to receive light into the lens body from a light source, a first exit surface positioned such that some of the light received from the light source through the incident surface exits through the first exit surface without being reflected within the lens body, a reflective surface adapted to reflect some of the light received from the light source through the incident surface within the lens body, and a second exit surface positioned such that at least some of the light reflected by the reflective surface exits through the second exit surface.

9. The lens of claim 8, wherein the light that exits through the first exit surface is directed in generally a first direction; and
wherein the light that exits through the second exit surface is directed in generally a second direction at an angle to the first direction.

10. The lens of claim 8, wherein the reflective surface has a reflective coating.

11. The lens of claim 8, wherein the first exit surface is aspheric; and
wherein the second exit surface is cylindrical or aspheric.

12. The lens of claim 8, wherein the incident surface is planar or aspheric.

13. An imaging reader for electro-optically reading a symbol by image capture, comprising:
a housing; and
an optical assembly mounted in the housing, the optical assembly comprising:
an imaging component having a field of view;
an aiming system comprising an aiming light source and an aiming lens through which aiming light from the aiming light source is transmitted; and
an illumination system comprising an illumination light source and an illumination lens having a lens body, the lens body having an incident surface positioned to receive light into the lens body from the illumination light source, a first exit surface positioned such that some of the light received from the illumination light source through the incident surface exits through the first exit surface without being reflected within the lens body, a reflective surface adapted to reflect some of the light received from the illumination light source through the incident surface within the lens body, and a second exit surface positioned such that at least some of the light reflected by the reflective surface exits through the second exit surface.

14. The imaging reader of claim 13, wherein the illumination system is positioned on an opposite side of the aiming system from the imaging component.

15. The imaging reader of claim 13, wherein the light exiting the lens body through the first exit surface is directed in generally a first direction to illuminate a first portion of an object positioned in a near field portion of the field of view; and
wherein the light exiting the lens body through the second exit surface is directed in generally a second direction at an angle to the first direction to illuminate a second portion of the object positioned in the near field portion of the field of view.
